(19) Europäisches Patentamt

European Patent Office

Office européen des brevets

(11) EP 0 528 134 B1

(12) **EUROPEAN PATENT SPECIFICATION**

(45) Date of publication and mention
of the grant of the patent:
**10.09.1997  Bulletin 1997/37**

(51) Int Cl.⁶: **G11B 7/24**

(21) Application number: **92110301.6**

(22) Date of filing: **17.06.1992**

(54) **Optical tape**

Optisches Band

Bande optique

(84) Designated Contracting States:
**DE FR GB IT LU NL**

(30) Priority: **24.06.1991  JP  151869/91**
**06.02.1992  JP  21418/92**

(43) Date of publication of application:
**24.02.1993  Bulletin 1993/08**

(73) Proprietor: **DIAFOIL HOECHST CO., LTD.**
**Chiyoda-ku Tokyo (JP)**

(72) Inventors:
  • **Utsumi, Shigeo**
    **Yamato-shi, Kanagawa-ken (JP)**
  • **Yoshida, Hidemi**
    **Atsugi-shi, Kanagawa-ken (JP)**
  • **Komiyama, Megumi**
    **Machida-shi, Tokyo (JP)**
  • **Kato, Kenji**
    **Yokohama-shi, Kanagawa-ken (JP)**

(74) Representative:
**TER MEER STEINMEISTER & PARTNER GbR**
**Mauerkircherstrasse 45**
**81679 München (DE)**

(56) References cited:
**EP-A- 0 176 017**

  • **DATABASE WPIL Week 1190, Derwent**
    **Publications Ltd., London, GB; AN 90-077781 11**
  • **DATABASE WPIL Week 3086, Derwent**
    **Publications Ltd., London, GB; AN 86-192251 30**
  • **DATABASE WPIL Week 0289, Derwent**
    **Publications Ltd., London, GB; AN 89-013458 02**
  • **PATENT ABSTRACTS OF JAPAN vol. 9, no. 194**
    **(M-403)(1917) 10 August 1985**

**Description**

BACKGROUND OF THE INVENTION

The present invention relates to an optical tape capable of recording/reproducing of an information by the irradiation of light. More in particular, the present invention relates to an optical tape having a remarkably improved recording/reproducing characteristics for an information to be recorded.

Heretofore, magnetic recording media have been used generally for information recording tapes and a demand for the improvement of information recording density has been increased in recent years. There have been reported, in compliance therewith, a utilizing method of an optical recording/reproducing system, for example, a Te-As-Se metal film disposed on a plastic base film (Japanese Patent Application Laid-Open (KOKAI) 57-33447) or a Te-Se alloys, Se-In-Sb alloys or Ag-Zn alloys formed on a polyimides base film by means of RF magnetron sputtering method, with a protection layer being formed further thereover (Japanese Patent Application Laid-Open (KOKAI) 62-132251).

The optical tapes proposed as described above have both merits and demerits regarding the base film and sufficient tapes have not yet been obtained. For instance, a biaxially stretched polyethylene terephthalate film generally used as a base film in magnetic tapes is poor in surface properties and has a problem also in view of birefringence index. A polycarbonate is satisfactory to some extent when used in the form of a disc, but it is difficult to obtain a film of an appropriate thickness when used in the form of a tape.

Further, since a recording layer formed by a thin film forming method such as vapor deposition method, sputtering method or ion plating method has a thin film-thickness, the surface state (surface unevenness) of a base film is revealed as the unevenness of a magnetic film, whereby the recording/reproducing characteristics deteriorate. Then, from a view point of the recording/reproducing characteristics, it is preferred that the surface state of the base film is as smooth as possible. However, no smooth tape-running property can be obtained if the surface of the base film is flat, since the film becomes poor in the slipperiness. Further, there is also a problem that handling property is poor during film production, and defects such as scratch tends to be caused to the film during passage in stretching rolls.

As a result of an earnest study for overcoming the foregoing technical drawbacks, it has been found that by using, as a base film for an optical tape, a biaxially stretched polyester multilayered film obtained by disposing a polyester layer containing no substantial particles on at least one side of a layer composed of crystalline polyester, the thus-obtained optical tape has excellent recording/reproducing characteristics. The present invention has been accomplished based on this finding.

SUMMARY OF THE INVENTION

In a first aspect of the present invention, there is provided an optical tape comprising a biaxially stretched polyester multilayered film comprising a layer composed of a crystalline polyester (A) and a layer composed of a polyester (B) having a particle content of not more than 0.05% by weight, and a recording layer disposed on the surface of the said layer composed of polyester (B).

In a second aspect of the present invention, there is provided an optical tape comprising

a biaxially stretched polyester multilayered film comprising a layer composed of a polyester (A) having a highly roughened surface with surface properties represented by the following formulae (1) - (3) and a layer composed of a polyester (B) having a less roughened surface, the said biaxially stretched polyester multilayered film having a tensile strength represented by the following formula (4),
a recording layer formed on the less roughened surface,
a back coating layer having a surface properties represented by the following formulae (5) - (6) and being formed on the highly roughened surface:

$$Ra^B \leq 0.005 \tag{1}$$

$$0.005 \leq Ra^A \leq 0.030 \tag{2}$$

$$0.005 \leq Ra^A - Ra^B \leq 0.026 \tag{3}$$

$$9 \leq F_5 \leq 30 \qquad (4)$$

$$0.012 \leq Ra^C \leq 0.040 \qquad (5)$$

$$0.003 \leq Ra^C - Ra^A \leq 0.035 \qquad (6)$$

wherein $Ra^B$ represents a center line average roughness ($\mu$m) on the less roughened surface of the polyester film, $Ra^A$ represents a center line average roughness ($\mu$m) on the highly roughened surface of the polyester film, $Ra^C$ represents a center line average roughness ($\mu$m) on the surface of the back coating layer and $F_5$ value represents a tensile strength of 5% elongation in the machine direction of the polyester film (kg/mm$^2$).

## DETAILED DESCRIPTION OF THE INVENTION

The crystalline polyester (A) used in the present invention is a polymer obtained by polycondensating an aromatic dicarboxylic acid such as terephthalic acid or naphthalene-2,6-dicarboxylic acid and an aliphatic glycol such as ethylene glycol, diethylene glycol, tetramethylene glycol or neopentyl glycol. As typical examples of such a polymer, there can be exemplified polyethylene terephthalate (PET) and polyethylene-2,6-naphthalene dicarboxylate (PEN). Further, as the polyester (A), a copolymer obtained by copolymerizing other aromatic or aliphatic dicarboxylic acids or diols in such an extent as not reducing the crystallinity, for example, by not more than 10 mol%, preferably not more than 5 mol%, may also be used. Further, it is also possible to blend other polymers, for example, polyamides, polyolefins or polycarbonates by not more than 10% by weight and within such a range as not greatly reducing the crystallinity or extremely roughening the surface.

Further, a polymer composition composed of different kinds of polymers may be used. For example, a combination of PET and/or PEN with other polymer may be used. Also, polymers of identical component but of different copolymerization ratio or different intrinsic viscosity may be combined and such combination can be selected depending on the purpose. The polyester may contain, in addition to an ester exchange catalyst and a polymerization catalyst, stabilizers such as phosphoric acid, phosphorus acid and ester thereof, antioxidant, defoaming agent, antistatic agent, colorant, ultraviolet absorber, flatting agent such as titanium dioxide, finely particulate silica, kaolinite and calcium carbonate, and lubricant, if necessary.

The thickness of the polyester (A) layer is from 0.01 to 30 $\mu$m, preferably 0.1 to 15 $\mu$m.

The polyester layer (hereinafter simply referred to as "slippery layer") forming an exposed surface on the side opposite to the polyester (B) layer may contain fine organic or inorganic particles in order to improve the slipperiness after forming the film.

As the fine organic or inorganic particles imparting the slipperiness, there can be mentioned inert external particles such as kaolin, clay, calcium carbonate, silica oxide, spherical silica, calcium terephthalate, aluminum oxide, titanium oxide, calcium phosphate, lithium fluoride, carbon black and (monodisperse) organic particles, and internal particles formed at the inside of the polymer upon production of the polyester from a high melting organic compound which is infusible upon melt-forming a polyester film, crosslinked polymer or a metal compound catalyst (for example, alkali metal compound, alkaline earth metal compound which is used upon synthesis of the polyester.

The slippery layer is incorporated usually with inert particles of an average particle diameter of 0.001 to 2.5 $\mu$m, preferably 0.01 to 1.0 $\mu$m, more preferably 0.01 to 0.5 $\mu$m, and 0.1 to 40% by weight, preferably 0.1 to 10% by weight, more preferably 0.1 to 5% by weight based on the polyester forming the slippery layer.

Since particles contained in the polyester (A) layer tends to affect on the surface property of the polyester (B) layer, it is preferred to further form an extremely thin layer composed of a polyester (A).

It is preferred that the extremely thin layer of polyester (A) is incorporated with inert particles of an average particle diameter of from 0.007 to 1.0 $\mu$m, preferably 0.01 to 1.0 $\mu$m, more preferably 0.01 to 0.5 $\mu$m, and 0.3 to 40% by weight, preferably 0.5 to 10% by weight based on the polyester (A).

Assuming the center line average roughness on the surface of the extremely thin layer of polyester (A) as $Ra^A$, the average roughness for 10 points as $Rz^A$, and the peak count per 0.8 mm as Pc, $Rz^A/Ra^A$ is preferably not more than 15.0, more preferably not more than 12.0, particularly preferably not more than 10.0 and Pc is usually not less than 50, preferably not less than 70, more preferably not less than 80. The $Ra^A$ is usually not more than 0.020 $\mu$m, preferably not more than 0.015 $\mu$m.

The thickness (t) for the extremely thin layer of polyester (A) is usually not more than 5 $\mu$m, preferably from 0.005 to 2 $\mu$m, more preferably from 0.01 to 1 $\mu$m, particularly preferably from 0.1 to 0.7 $\mu$m. The ratio (t/d) between the thickness (t) for the extremely thin layer of polyester (A) and the average particle diameter (d) of inert particles contained in the polyester (A) layer is preferably from 0.1 to 10, more preferably from 0.2 to 5.0, particularly preferably from 0.3 to 3.5. If the t/d ratio is out of the above described range, the surface property of the film when formed as a rolled product, tends to become deteriorated.

Particularly, a slippery layer composed of a polyester containing such fine particles wherein the center line average surface roughness ($Ra^A$) of the exposed surface of the slippery layer (highly roughened surface) after stretching and heat-setting is from 0.005 to 0.030 μm, is preferred. If the $Ra^A$ is less than 0.005 μm, the running property thereof becomes poor. On the other hand, if the $Ra^A$ is more than 0.30 μm, the running property thereof is no more improved but adhesion with a cooling drum upon vapor deposition becomes poor.

The polyester (B) used in the present invention may be identical melting point with the polyester (A). A polyester having a melting point lower than that of the polyester (A) is preferred as the polyester (B). That is, a copolyester prepared by copolymerizing an ester as a main component used for the polyester (A) such as ethylene terephthalate, or ethylene-2,6-naphthalate with one or more of other components, is preferred.

As the other copolymerizing component used herein, one or more of known dicarboxylic acids such as oxalic acid, malonic acid, succinic acid, adipic acid, azelaic acid, sebacic acid, 1,10-decanedicarboxylic acid, phthalic acid, isophthalic acid, terephthalic acid, naphthalene dicarboxylic acid and diphenyl ether dicarboxylic acid can be used as the dicarboxylic acid component, as well as one or more of known diol components such as neopentyl glycol, 1,4-butanediol, trimethylene glycol, propylene glycol, tetramethylene glycol, hexamethylene glycol, diethylene glycol, polyalkylene glycol and 1,4-cyclohexanedimethanol can be used as the diol component. Further, an oxycarboxylic acid such as p-oxybenzoic acid and p-oxyethoxybenzoic acid, a monofunctional compound such as benzoic acid, benzoyl benzoic acid and methoxy polyalkylene glycol, and a polyfunctional compound such as glycerin and pentaerythritol may also be used so long as within such a range that the product can maintain a substantially linear high-molecular form.

The content of the copolymerizing components other than the ester unit as the main component of the polyester (A), which are used in the polyester (B) is properly adjusted such that the sum of the ratio of the carboxylic acid component in the copolymerizing components to the total carboxylic acid component (T mol%) and the ratio of the diol component in the copolymerizing components to the total diol component (W mol%) is within a range from 6 to 40 mol%, preferably 10 to 40 mol%. If the ratio is less than 6 mol%, effects such as preventing effect for particle falling-off and improving effect for abrasion resistance are difficult to be expected. On the other hand, if it exceeds 40 mol%, it makes the production of a multilayered film difficult.

It is necessary that the polyester (B) has a particle content of not more than 0.05% by weight.

As the polyester resin having such a particle content there can be used suitably a polyester obtained by using, for example, an ester exchanging catalyst such as a magnesium compound, manganese compound or zinc compound and preventing deposition of a catalyst residue by a phosphorus compound, or a polyester obtained by a direct polymerization process in which an esterifying catalyst is not used. As the polymerization catalyst, an antimony compound, germanium compound, titanium compound, tin compound, for example, may be used. A low catalyst resin polymerized by reducing the amount of antimony is more preferred.

Fine particles of high hardness, for example, fine particles of aluminum oxide may be added to polyester (B) layer within the above-mentioned amount for the purpose of reducing the generation of defects upon film-formation by stretching such as scratches.

There is no particular restriction on the thickness of the polyester (B) layer, and it is preferably from 0.01 to 49.99 μm. In a case of using the copolyester layer, the thickness of the polyester (B) layer is usually not more than 10 μm, preferably from 0.01 to 3 μm, more preferably from 0.1 to 1 μm.

The degree of planar orientation (AP) for the polyester (B) layer is preferably not more than 0.100, more preferably not more than 0.030, particularly preferably not more than 0.010. If the $\Delta P$ is more than 0.100, the film, sometimes, curls or adhesion of the recording layer may be poor.

A coating layer may be disposed on the surface of the polyester (B) layer in order to raise the adhesion with an optical recording layer or further to improve the evenness.

It is preferred that the center line average roughness ($Ra^B$) of the polyester (B) film after stretching and heat-setting is smaller. In the present invention, the $Ra^B$ is not more than 0.005 μm, preferably not more than 0.003 μm. If the $Ra^B$ exceeds 0.005 μm, the optical recording characteristics tend to be lowered or deteriorated.

Depending on the selection of the ratio for the thickness between the polyester (A) layer and the polyester (B) layer, and the surface roughness thereof, protrusions on the surface of the polyester (A) layer affect the smooth surface of the polyester (B) layer. In case of increasing the surface roughness (Ra) of the surface of the polyester (B) layer by the formation of long-period unevenness or undulation as compared with a case of forming the film alone, or a case of forming fine unevenness by selecting various conditions for heat-treatment, relaxation and stretching as well as casting conditions, but it may be suffice that both surfaces of the base film of the optical tape can satisfy the conditions described above. However, it is better that such long-period undulation is not present therein and for avoiding such undulation, the thickness for the polyester (A) layer is set usually not more than 1/2, preferably not more than 1/3, more preferably not more than 1/4 of the total thickness.

The difference of the surface roughness ($Ra^A$ - $Ra^B$) between the surface of the polyester (A) film and the surface of the polyester (B) film is within a range from 0.005 to 0.026 $\mu$m. If the difference therebetween is less than 0.005 $\mu$m, it is difficult to maintain the excellent running property of the film. On the other hand, if the difference therebetween exceeds 0.026 $\mu$m, a back-side transfer phenomenon that the surface configuration reflects from the surface of the polyester (A) film to the surface of the polyester (B) film, happens at taking-up the film and accordingly, the flatness of the film becomes poor. It is preferred that the difference therebetween is from 0.007 to 0.020 $\mu$m.

For preventing the back-side transfer phenomenon of the surface shape of the polyester (A) film to the surface of the polyester (B) film, it is preferable, for example, that by properly selecting the stretching conditions, protrusions each having a recess at the periphery of each of protrusions as a nuclei are formed on the surface of the polyester (A) film, so as to bury the added particle in the recess.

The base film has a tensile strength upon 5% elongation in the longitudinal direction ($F_5$ value) within a range from 9 to 30 kg/mm$^2$, preferably 14 to 30 kg/mm$^2$, more preferably 18 to 30 kg/mm$^2$.

If the $F_5$ value in the machine direction of the base film is less than 9 kg/mm$^2$, the durability of the optical tape becomes to deteriorate. On the other hand, if the $F_5$ value exceeds 30 kg/mm$^2$, the continuity in the film production step becomespoor and such base film becomes not to be practical.

There is no particular restriction on the thickness of the base film and it is practically within a range from 3 to 50 $\mu$m, preferably from 7 to 50 $\mu$m, more preferably 10 to 30 $\mu$m. If the thickness thereof is less than 3 $\mu$m, the film strength becomes insufficient.

There is particular restriction on the method of manufacturing the multilayered film as the base film in the present invention and lamination by a so-called coextrusion method is preferred. That is, an unstretched film obtained by coextruding polyesters laminating a molten polyesters in a lamellar form in a die of an extruder is biaxially stretched by a customary method and, subsequently, is subjected to a heat-setting.

For restricting the degree of planar orientation ($\Delta P$) of the polyester (B) layer to below 0.100, the film is heat-set at a temperature between not less than the melting point of the polyester for the polyester (B) layer and not more than the melting point of that for the polyester (A) layer.

Further, for example, an adhesion property, an antistatic property, or a slipperiness of the film can be improved by forming a coating layer on one or both of surfaces of the film during, before or after the stretching step.

The multilayered film as the base film in the present invention is basically composed of a two-layered film prepared by laminating the polyester (B) layer on one side of the polyester (A) layer, or a three-layered film prepared by laminating the polyester (B) layer and the thin layer of polyester (A) by way of the polyester (A) layer. Further, four or more-layered film may be used.

As the recording layer formed on the base film in the present invention, any of a write-once recording layer capable of recording only for once and an erasable recording layer capable of repeating erasing can be used. As the erasable type, a magneto-optic recording medium utilizing a magneto-optic effect or a phase-transfer medium utilizing a reversible transfer of the state of crystallization can be mentioned. The erasable recording media comprise a layer constitution of base film / dielectric layer / recording layer / dielectric layer / reflecting layer in the case of conducting the recording/ reproducing of information by the irradiation of laser beam on the side of the base film, or comprise a layer constitution of base film / reflecting layer / dielectric layer / recording layer / dielectric layer in the case of irradiating the laser beam on the side of the recording layer.

The dielectric layer is used for a purpose of protecting a readily oxidizing recording layer from moisture or oxygen and for a purpose of preventing a deformation of the recording layer, and usually, a transparent and high heat-resistant metal oxide, metal nitride, metal sulfide, or inorganic carbide may be used.

As the metal oxide, metal oxides such as $Al_2O_3$, $Ta_2O_5$, SiO, $SiO_2$ and a mixture thereof, and composite oxides such as Al-Ta-O may be exemplified. Further, to the above-mentioned compounds, other elements, for example, Ti, Zr, Mo and Y in the form of oxides alone or in combination with Al or Ta may be added. Since such metal oxides have a dense structure, they can prevent an infiltration of moisture or oxygen from the outside, have a high corrosion-resistance, and are less reactive with the magneto-optic recording layer or the phase transfer recording layer and excellent in adhesion with the resin.

As the metal nitrides, nitrides of metals such as Si, Al and Ge, composite nitrides of two or more of them and composite oxides thereof with Nb and Ta (for example, SiNbN, SiTaN) may be exemplified. Among them, Si-containing nitrides show more excellent effect. The metal nitrides are dense, can prevent an infiltration of moisture or oxygen from the outside and have a high corrosion-resistance.

As the metal sulfides, ZnS and a mixture with the above-mentioned metal oxide or metal nitride may be exemplified.

As the inorganic carbides, SiC can be mentioned.

In the present invention, tantalum oxide ($Ta_2O_5$) and zinc sulfide (ZnS) are more preferred since they cause less cracking.

A preferred film thickness of the dielectric layer is about from 50 to 300 nm (500 to 3,000 Å) for the dielectric layer on the side of the base film and about 10 to 30 nm (100 to 3,000 Å) on the side of the reflecting layer (outer side).

For the recording layer, there can be used alloys of rare earth elements and transition metals, for example, magneto-optic recording materials such as TbFeCo, GdTbFe, GdTbFeCo, GdDyFeCo and NdDyFeCo or phase-transfer recording materials such as Ge-Te materials, Ge-Sb-Te materials and In-Sb-Te materials.

The film thickness of the recording layer is preferably within a range from 10 to 200 nm (100 to 2,000 Å).

The film thickness of the recording layer and the dielectric layer is selected so that the absorption efficiency for the laser beam is high, and the amplitude of recording signals, that is, the contrast between the recording state and the unrecording state is increased in view of the interference effect caused by multilayered constitution.

As the reflecting layer, a thin film of metal such as Al, Au, Ag and Ni having a high reflectance is usually used. The reflecting layer also has an effect of promoting the diffusion of heat-energy absorbed in the recording layer. The film thickness of the reflecting layer is preferably within a range from 20 to 300 nm (200 to 3,000 Å). Further, a resin protecting layer composed of a UV-ray curable resin may be formed on the reflecting layer.

The recording layer, dielectric layer and reflecting layer are formed by a known vacuum thin-film forming method, for example, a vacuum vapor deposition method, ion plating method or sputtering method. The sputtering method is recommended, particularly, with a view point of easy control of the composition and film thickness. The thickness of the recording layer to be formed can be controlled by monitoring using a film thickness gage such as a quartz oscillator as a known technique.

It is preferred in the optical tape according to the present invention to irradiate a converged optical beam on the side of the recording layer so as to conduct a recording.

An optical tape having a back-coating layer disposed by a known means on the side of the optical recording medium opposite to the vapor deposition surface thereof is more preferred. As the material of the back-coating layer, ones described in Japanese Patent Application Laid-Open (KOKAI) No. 62-245523 may be used.

The back-coating layer may be formed before the formation of the optical recording layer, but it is more preferable to form the layer after the formation of the optical recording layer.

The center line average roughness ($Ra^C$) on the surface of the back-coating layer is within a range from 0.012 to 0.040 $\mu m$, preferably 0.015 to 0.035 $\mu m$. If the $Ra^C$ is less than 0.012 $\mu m$, the running property of the optical tape becomes insufficient. On the other hand, if the $Ra^C$ exceeds 0.040 $\mu m$, the back-coating layer become inferior in the uniformity.

The difference between the $Ra^C$ of the thus obtained back-coating layer and the $Ra^A$ on the surface of the polyester (A) film ($Ra^C$ - $Ra^A$) is within a range from 0.003 to 0.035 $\mu m$, preferably 0.008 to 0.035 $\mu m$. If the difference thereof is less than 0.003 $\mu m$, the roughness on the surface of the polyester (A) film may affect to that of the back-coating layer, may deteriorate the uniformity of the protrusions and may give undesired effect on the running property. On the other hand, if the difference thereof exceeds 0.035 $\mu m$, the protrusions on the surface of the back coating layer become non-uniform and the durability in the running property become to be worsened.

The thickness of the back coating layer in the present invention is from 0.01 to 5 $\mu m$, preferably 0.1 to 3 $\mu m$.

The optical recording medium according to the present invention (optical tape) has C/N of not less than 50 dB in a case where the recording medium runs at a linear velocity of 4 m/s, a semiconductor laser beam is irradiated on the side of the recording layer and signals at 1 MHz are recorded.

EXAMPLE

The present invention will now be described more specifically referring to examples but the invention is not restricted only to these examples.

Evaluation methods for the film are as shown below:

(1) Melting Point (Tm)

Using a DSC-1 Model (manufactured by Parkin-Elmer Co.), an endothermic peak temperature due to melting of crystals obtained at an elevating temperature of 16°C/min was determined as a melting point.

(2) Degree of Planar Orientation ($\Delta P$)

Using an Abbe-type refractometer (manufactured by Atago Optics Co.), maximum value ($n\gamma$) for the refractive index within a surface of the film, a refractive index ($n\beta$) in the direction perpendicular thereto and a refractive index ($n\alpha$) in the direction of the thickness of the film were measured and the degree of planar orientation was calculated according to the following formula. The refractive index was measured by using a sodium D-ray at 23°C.

$$\text{Degree of planar orientation } (\Delta P) = \frac{(n\gamma + n\beta)}{2} - n\alpha$$

(3) Center Line Average Roughness (Ra, Rz)

The average surface roughness was determined as follows by using a surface roughness apparatus (SE-3F) [manufactured by Kosaka Institute Co.]. That is, a portion of a sampling length L (2.5 mm) was sampled in the direction of the center line from a film cross sectional curve. A value given by the following formula is represented by "μm" when expressing the roughness curve: y = f(x), indicating the center line for the sampled portion on the x-axis and the direction of the longitudinal stretching on the y-axis. The center line average roughness (Ra) is represented by determining ten cross sectional curves from the surface of the specimen film and expressed by an average value for the center line roughness of the sampled portion determined from the cross sectional curves. Further, the tip radius of the probe was 2 μm, the load was 30 mg and the cut-off value was 0.08 mm.

$$Ra = \frac{1}{L} \int_0^L \left| f(x) \right| \, dx$$

Further, measurement was conducted at 12 points, the maximum value and the minimum thereof were cut off respectively and the ten point average roughness (Rz) was indicated by an average value for 10 points.

(4) Peak Count (Pc)

Peak count was measured by using a surface roughness apparatus (SE-3F) [manufactured by Kosaka Institute Co.] under the conditions of 0.08 mm of cut-off, 10 mg of needle pressure, 2 μm of probe radius, 0.8 mm of measuring length, 50,000 times for height and 100 times for width. The Pc is a count for the number of hills that is defined as the successive presence of rising-rightward crossing points each formed between the resultant center line for the cross sectional curves and the roughness curves.

(5) Tensile Test ($F_5$ value)

A specimen film of 50 mm in length and 15 mm in width was pulled at a rate of 50 mm/min in a room adjusted to a temperature of 23°C and a humidity of 50% RH by using a tensilon tester Intesco Model 2001 (manufactured by Intesco Co.), and the strength at 5% elongation was defined as $F_5$ value.

Example 1

Polyester Production Method

87 parts of terephthalic acid and 42 parts by weight of ethylene glycol were reacted in the presence of 100 parts by weight of bis-(β-hydroxyethyl)terephthalate oligomer under a normal pressure at a temperature of 260°C, to obtain a polyester oligomer of 97% of the degree of esterification.

Then, after adding slurry of spherical silica of an average particle diameter of 0.27 μm in ethylene glycol each by 2% by weight to the polyester, polycondensating reaction was conducted with addition of 0.011 part by weight of ethyl acid phosphate, 0.022 part by weight of antimony trioxide and 0.086 part by weight of magnesium acetate to obtain a polyester of an intrinsic viscosity of 0.65 as a starting material (a). Further, the polyester with no addition of the silica particles was formed as the starting material (c). On the other hand, a starting material (b) was formed from a copolyester having a dicarboxylic acid unit composed of 80 mol% of a terephthalic acid component and 20 mol% of an isophthalic acid component and a diol unit composed of 98 mol% of ethylene glycol component and 2 mol% of diethylene glycol component, which did not substantially contain particles. The starting materials (a), (b) and (c) had the intrinsic viscosity of 0.58, 0.68 and 0.62 respectively.

The starting materials (a), (b) and (c) were respectively dried, melted by separate extruders at 287°C such that a polyester (B) layer composed of the polyester (b) and a layer composed of the polyester (c) were laminated on both surfaces of a polyester (A) layer composed of the polyester (a) joining in a die, and the thus-obtained multilayered was quenched to obtain an unstretched film. After stretching the resultant unstretched film at first in the machine direction by 2.4 times at a temperature of 84°C, it was further stretched in the machine direction by 1.25 times at a temperature of 95°C. Then, after stretching in the transverse direction by 3.9 times at a temperature of 120°C, it was heat-set at a temperature of 219°C to obtain a multilayered film of 15 μm in thickness. In the resultant film, the thickness of the polyester (B) layer was 0.9 μm and the thickness of the layer of polyester (c) was 0.6 μm. Further, the melting point of the starting material (b) was 218°C, Ra for the layer of polyester (c) was 0.014 μm, Rz/Ra was 9.0 and Pc was 108.

On the polyester (B) layer in a long film of 15 μm in thickness, there were formed an Al reflecting layer of 100 nm (1,000 Å), a $Ta_2O_5$ dielectric layer of 150 nm (1,500 Å), a $Ge_{22}Sb_{28}Te_{50}$ (atom%) recording layer of 70 nm (700 Å) and $Ta_2O_5$ dielectric layer of 110 nm (1,100 Å) by means of sputtering method in an identical chamber under vacuum successively, thereby obtaining a phase-transfer recording medium. When the resultant phase-transfer recording medium was caused to run at a linear velocity of 4 m/s, a semiconductor laser beam was irradiated on the side of the recording layer and signals at 1 MHz were recorded, a satisfactory C/N of not less than 50 dB was obtained and overwriting was possible.

Example 2

Using a polyethylene terephthalate starting material not containing particles at the inside as the starting material for the layer (B) and a polyethylene terephthalate starting material containing 0.31 wt% of $\delta$-Al$_2$O$_3$ particles and 0.008 wt% of synthetic calcium carbonate particles of 0.6 $\mu$m as the starting material for the layer (A), they were coextruded into a sheet such that the thickness ratio between the layer (B) and the layer (A) was 1:5. The sheet was stretched in the machine direction by 3.3 times at a temperature of 85 to 95°C, stretched in the transverse direction by 3.5 times at a temperature of 95 to 100°C by a tenter and, subsequently, heat-set at a temperature of 215°C, thereby obtaining a multilayered film of 15 $\mu$m in thickness. The properties of the resultant film are shown in the following Table 1.

The resultant film had a satisfactory sliding property, caused no blocking and could be taken-up satisfactorily. Further, no defects such as scratches were formed on the surface of the film. On the surface of the polyester film (B), by means of sputtering method, an Al reflecting layer of 100 nm (1,000 Å), a Ta$_2$O$_5$ dielectric layer of 150 nm (1,500 Å), a Ge$_{22}$Sb$_{28}$Te$_{50}$ (atom%) recording layer of 70 nm (700 Å) and a Ta$_2$O$_5$ dielectric layer of 110 nm (1,100 Å) were formed in an identical chamber under vacuum successively and then a back coating layer was formed on the opposite surface of the polyester film (A), thereby obtaining a phase-transfer recording medium.

When the resultant phase-transfer recording medium was caused to run at a linear velocity of 4 m/s, a semiconductor laser beam was irradiated on the side of the recording layer and signals at 1 MHz were recorded, a satisfactory C/N of not less than 50 dB was obtained and overwriting was also possible.

Example 3

On the surface of the polyester film (B) obtained in Example 2, by means of sputtering, an Al reflecting layer of 100 nm (1,000 Å), a Ta$_2$O$_5$ dielectric layer of 900 nm (9,000 Å), Tb$_{22}$Fe$_{70}$Co$_8$ (atom%) recording layer of 40 nm (400 Å) and a Ta$_2$O$_5$ dielectric layer of 75 nm (750 Å) were formed thereon successively in one identical chamber under vacuum and then a back coating layer was formed on the opposite surface of the polyester film (A), thereby obtaining magneto-optic recording medium.

After collectively erasing the resultant magneto-optic recording medium by an electromagnet, when a semiconductor laser was irradiated on the side of the recording layer while causing the medium to run at a linear velocity of 4 m/s, and signals at 1 MHz were recorded under application of a bias magnetic field at 15.9 kA/m (200 Oe), a satisfactory C/N ratio of not less than 50 dB was obtained.

Comparative Example 1

When a film was formed in the same procedures as those in Example 2 except for forming a monolayer such that both of the surface and back surface thereof had a same roughness as that of the surface of the polyester film (B) in Example 2, since the take-up was difficult, the generation frequency of the scratch was high and the yield was extremely poor, it was impossible for industrial production.

Example 4

An unstretched film was obtained in the same procedures as those in Example 2 except for using a polyethylene-2,6-naphthalate film instead of the polyethylene terephthalate in Example 2. The resultant unstretched film was stretched in the machine direction by 4.5 times at a temperature of 135°C, as well as then stretched in the transverse direction by 4.3 times at a temperature of 150°C, and subsequently, further stretched in the machine direction by 1.2 times at a temperature of 140°C again, as well as stretched in the transverse direction again by 1.15 times at a temperature of 200°C, and then heat-set at a temperature of 225°C, thereby obtaining a multilayered film of 10 $\mu$m in thickness. Physical properties of the resultant film are shown in the following Table 1. An optical recording layer was formed on the flattened surface of the resultant multilayered film and a back-coat layer was formed in the same manner as in Example 2, thereby obtaining a phase-transfer recording medium.

When the resultant phase-transfer recording medium was caused to run at a linear velocity of 4 m/s, a semiconductor laser beam was irradiated on the side of the recording layer and signals at 1 MHz were recorded, a satisfactory C/N of not less than 50 dB was obtained and overwriting was also possible.

Table 1

|  | Example 2 | Example 3 | Comp. Example 1 | Example 4 |
|---|---|---|---|---|
| $Ra^B$ (μm) | 0.002 | 0.002 | 0.002 | 0.002 |
| $Ra^A$-$Ra^B$ | 0.010 | 0.010 | 0 | 0.009 |
| F5 (kg/mm2) | 10.8 | 10.8 | 10.8 | 10.8 |
| $Ra^C$ | 0.026 | 0.026 | 0.026 | 0.026 |
| $Ra^C$-$Ra^A$ (μm) | 0.014 | 0.014 | 0.024 | 0.015 |

(note)
Evaluation for the characteristics of the films and the optical tapes in Examples 2 - 4 and Comparative Example 1 were according to the following methods.

**Claims**

1.  An optical tape comprising a biaxially streched polyester multilayered film comprising a layer composed of a crystalline polyester (A) and a layer composed of a polyester (B) having a particle content of not more than 0.05 % by weight and a recording layer disposed on said layer composed of said polyester (B).

2.  An optical tape according to claim 1, wherein a dielectric layer is disposed between the layer composed of the polyester (B) and the recording layer and a dielectric layer and a reflecting layer are disposed successively on the recording layer.

3.  An optical tape according to claim 1, wherein a reflecting layer and a dielectric layer are disposed successively between the layer composed of the polyester (B) and the recording layer, and a dielectric layer is disposed on the recording layer.

4.  An optical tape according to claim 1, wherein the crystalline polyester (A) is a polycondensed polymer comprising an aromatic dicarboxylic acid and an aliphatic glycol.

5.  An optical tape according to claim 1, wherein the melting point of polyester (B) is either identical with or lower than that of the crystalline polyester (A).

6.  An optical tape according to claim 5, wherein the polyester (B) having the lower melting point comprises a copolyester prepared by copolymerizing an aromatic dicarboxylic acid component and aliphatic glycol component of the crystalline poleyster (A) with at least one of other components.

7.  An optical tape according to claim 6. wherein the content of the copolymerizing components other than the ester unit as the main component of the polyester(A), which are used in the polyester (B) is adjusted such that the sum of the ratio of the carboxylic acid component in the copolymerizing components to the total carboxylic acid component and the ratio of the diol component in the copolymerizing components to the total diol component is within a range from 6 to 40 mol%.

8.  An optical tape according to claim 1, wherein the degree of planar orientation $\Delta P$ of the layer composed of the polyester (B) is not more than 0.100.

9.  An optical tape according to claim 1, wherein the layer composed of the polyester (A) contains organic fine particles or inorganic fine particles or a mixture thereof.

10. An optical tape according to claim 1, wherein an extremely thin layer composed of the polyester (A) is disposed on the exposed surface of the layer composed of the polyester (A) so as to laminate the layer composed of polyester (B) and said thin layer by way of the layer composed of the polyester (A), and contains 0.3 to 40 % by weight of inert particles based on the polyester (A).

11. An optical tape according to claim 10, wherein the thickness of said extremely thin layer is not more than 5 μm and the ratio of the thickness for the extremely thin layer composed of the polyester (A) to the average particle diameter of inert particles contained in the layer composed of the polyester (A) is from 0.1 to 10.

**12.** An optical tape according to claim 10, wherein $Rz^A/Ra^A$ for said extremely thin layer is not more than 15.0 (wherein $Rz^A$ denotes a 10 point average roughness and $Ra^A$ denotes a center line average roughness), the peak count (Pc) per 0.8 mm is not less than 50, and $Ra^A$ is not more than 0.020 μm.

**13.** An optical tape according to claim 1, wherein the thickness of the biaxially stretched polyester multilayered film is from 3 to 50 μm and the thickness for the layer composed of the polyester (B) is from 0.01 to 49.99 μm.

**14.** An optical tape according to claim 1, wherein a back coating layer having the surface roughness represented by the following general formulae (5) and (6) is formed on the exposed surface of the polyester multilayered film having surface characteristics represented by the following formulae (1) - (3) opposite to the recording layer and a characteristic represented by the following formula (4):

$$Ra^B \leq 0.005 \tag{1}$$

$$0.005 \leq Ra^A \leq 0.030 \tag{2}$$

$$0.005 \leq Ra^A - Ra^B \leq 0.026 \tag{3}$$

$$9 \leq F_5 \leq 30 \tag{4}$$

$$0.012 \leq Ra^C \leq 0.040 \tag{5}$$

$$0.003 \leq Ra^C - Ra^A \leq 0.035 \tag{6}$$

wherein $Ra^B$ represents a center line average roughness (μm) of the less roughened surface of the polyester film, $Ra^A$ represents a center line average roughness (μm) of the highly roughened surface of the polyester film, $Ra^C$ represents a center line average roughness (μm) of the surface of the back coating layer, and $F_5$ value represents a tensile strength of 5 % elongation in the machine direction of the polyester multilayered film (kg/mm$^2$).

**15.** An optical tape according to claim 14, wherein the thickness of the back coating layer is from 0.01 to 5 μm.

**Patentansprüche**

**1.** Optisches Band, umfassend eine biaxial gereckte Polyester-Mehrschichtfolie, umfassend eine Schicht, die aus einem kristallinen Polyester (A) zusammengesetzt ist, und eine Schicht. die aus einem Polyester (B) mit einem Teilchengehalt von nicht mehr als 0,05 Gew. -% zusammengesetzt ist, und eine auf der aus dem Polyester (B) zusammengesetzten Schicht vorgesehene Aufzeichnungsschicht.

**2.** Optisches Band nach Anspruch 1, wobei eine dielektrische Schicht zwischen der aus dem Polyester (B) zusammengesetzten Schicht und der Aufzeichungsschicht vorgesehen ist, und eine dielektrische Schicht sowie eine Reflektionsschicht nacheinander auf der Aufzeichnungsschicht vorgesehen sind.

**3.** Optisches Band nach Anspruch 1, wobei eine Reflektionsschicht und eine dielektrische Schicht nacheinander zwischen der aus dem Polyester (B) zusammengesetzten Schicht und der Aufzeichnungsschicht vorgesehen sind, und eine dielektrische Schicht auf der Aufzeichnungsschicht vorgesehen ist.

**4.** Optisches Band nach Anspruch 1, wobei der kristalline Polyester (A) ein polykondenstiertes Polymer ist, das eine aromatische Dicarbonsäure und ein aliphatisches Glykol umfaßt.

**5.** Optisches Band nach Anspruch 1, wobei der Schmelzpunkt des Polyesters (B) entweder identisch mit dem oder niedriger als der des kristallinen Polyesters (A) ist.

**6.** Optisches Band nach Anspruch 5, wobei der Polyester (B) mit dem niedrigeren Schmelzpunkt einen Copolyester umfaßt, der hergestellt worden ist durch Copolymerisieren einer aromatischen Dicarbonsäurekomponente und einer aliphatischen Glykolkomponente des kristallinen Polyesters (A) mit mindestens einer von weiteren Komponenten.

**7.** Optisches Band nach Anspruch 6, wobei der Gehalt der von der Estereinheit als der Hauptkomponente des Polyesters (A) verschiedenen, copolymerisierenden Komponenten, welche beim Polyester (B) verwendet werden, so eingestellt wird, daß die Summe des Verhältnisses der Carbonsäurekomponente in den copolymerisierenden Komponenten zu der Gesamtcarbonsäurekomponente und des Verhältnisses der Diolkomponente in den copolymerisierenden Komponenten zu der Gesamtdiolkomponente innerhalb eines Bereichs von 6 bis 40 Mol% liegt.

**8.** Optisches Band nach Anspruch 1, wobei der Grad der Planarorientierung AP der aus dem Polyester (B) zusammengesetzten Schicht nicht mehr als 0,100 beträgt.

**9.** Optisches Band nach Anspruch 1, wobei die aus dem Polyester (A) zusammengesetzte Schicht organische. feine Teilchen oder anorganische, feine Teilchen oder eine Mischung hiervon enthält.

**10.** Optisches Band nach Anspruch 1, wobei eine aus dem Polyester (A) zusammengesetzte, extrem dünne Schicht auf der freiliegenden Oberfläche der aus dem Polyester (A) zusammengesetzten Schicht vorgesehen ist. um so die aus dem Polyester (B) und die dünne Schicht mittels der aus dem Polyester (A) zusammengesetzten Schicht zu laminieren, und 0,3 bis 40 Gew.-% inerter Teilchen enthält, basierend auf dem Polyester (A).

**11.** Optisches Band nach Anspruch 10, wobei die Dicke der extrem dünnen Schicht nicht mehr als 5 μm beträgt und das Verhältnis der Dicke der extrem dünnen Schicht, die aus dem Polyester (A) zusammengesetzt ist, zu dem durchschnittlichen Teilchendurchmesser von inerten Teilchen, welche in der aus dem Polyester (A) zusammengesetzten Schicht enthalten sind. 0,1 bis 10 beträgt.

**12.** Optisches Band nach Anspruch 10, wobei $Rz^A/Ra^A$ für die extrem dünne Schicht nicht mehr als 15,0 beträgt (worin $Rz^A$ eine 10-Punkt-Durchschnittsrauhigkeit und $Ra^A$ eine Mittellinien-Durchschnittsrauhigkeit angeben), die Peakanzahl (Pc) pro 0,8 mm nicht weniger als 50 beträgt, und $Ra^A$ nicht mehr als 0,020 μm beträgt.

**13.** Optisches Band nach Anspruch 1, wobei die Dicke der biaxial gereckten Polyester-Mehrschichtfolie 3 bis 50 μm beträgt, und die Dicke der aus dem Polyester (B) zusammengesetzten Schicht 0,01 bis 49,99 μm beträgt.

**14.** Optisches Band nach Anspruch 1, wobei eine Rückseitenüberzugsschicht mit einer Oberflächenrauhigkeit gemäß den folgenden allgemeinen Formeln (5) und (6) auf der freiliegenden Oberfläche der Polyester-Mehrschichtfolie, mit Oberflächencharakteristika gemäß den folgenden Formeln (1) - (3) gegenüberliegend derAufzeichnungsschicht gebildet ist. und einem Charakteristikum gemäß der folgenden Formel (4):

$$Ra^B \leq 0,005 \tag{1}$$

$$0,005 \leq Ra^A \leq 0,030 \tag{2}$$

$$0,005 \leq Ra^A - Ra^B \leq 0,026 \tag{3}$$

$$9 \leq F_5 \leq 30 \tag{4}$$

$$0,012 \leq Ra^C \leq 0,040 \tag{5}$$

$$0,003 \leq Ra^{C} - Ra^{A} \leq 0,035 \qquad (6)$$

worin $Ra^{B}$ eine Mittellinien-Durchschnittsrauhigkeit (μm) der weniger aufgerauhten Oberfläche der Polyesterfolie bedeutet. $Ra^{A}$ eine Mittellinien-Durchschnittsrauhigkeit (μm) der hochaufgerauhten Oberfläche der Polyesterfolie bedeutet, $Ra^{C}$ eine Mittellinien-Oberflächenrauhigkeit (μm) der Oberfläche der Rückseitenüberzugsschicht bedeutet, und der $F_{5}$-Wert eine Zugfestigkeit bei 5% Dehnung in Maschinenrichtung der Polyester-Mehrschichtfolie (kg/mm$^2$) bedeutet.

**15.** Optisches Band nach Anspruch 14, wobei die Dicke der Rückseitenüberzugsschicht 0,01 bis 5 μm beträgt.

**Revendications**

1. Bande optique comprenant un film à plusieurs couches de polyester étiré selon deux axes, comprenant une couche d'un polyester cristallin (A) et une couche d'un polyester (B) ayant une teneur en particules non supérieure à 0,05 % en poids, et une couche d'enregistrement disposée sur ladite couche comprenant ledit polyester (B).

2. Bande optique selon la revendication 1, dans laquelle une couche diélectrique est disposée entre la couche comprenant le polyester (B) et la couche d'enregistrement, et une couche diélectrique ainsi qu'une couche réfléchissante sont successivement disposées sur la couche d'enregistrement.

3. Bande optique selon la revendication 1, dans laquelle une couche réfléchissante et une couche diélectrique sont successivement disposées entre la couche comprenant le polyester (B) et la couche d'enregistrement, et une couche diélectrique est disposée sur la couche d'enregistrement.

4. Bande optique selon la revendication 1, dans laquelle le polyester cristallin (A) est un polymère polycondensé dérivé d'un acide dicarboxylique aromatique et d'un glycol aliphatique.

5. Bande optique selon la revendication 1, dans laquelle le point de fusion du polyester (B) est identique ou inférieur à celui du polyester cristallin (A).

6. Bande optique selon la revendication 5, dans laquelle le polyester (B) ayant le point de fusion relativement faible, comprend un copolyester préparé par copolymérisation d'un composant de type acide dicarboxylique aromatique et d'un composant de type glycol aliphatique du polyester cristallin (A) avec au moins l'un des autres composants.

7. Bande optique selon la revendication 6, dans laquelle la teneur en les composants copolymérisables autres que le motif ester, en tant que le principal composant du polyester (A) qui sont employés dans le polyester (B), est ajustée de telle façon que la somme du rapport du composant de type acide carboxylique dans les composants copolymérisables au composant de type acide carboxylique total, et du rapport du composant de type diol dans les composants copolymérisables au composant de type diol total est de 6 à 40 moles %.

8. Bande optique selon la revendication 1, dans laquelle le degré d'orientation en plan ΔP de la couche comprenant le polyester (B), n'est pas supérieur à 0,100.

9. Bande optique selon la revendication 1, dans laquelle la couche comprenant le polyester (A) contient de fines particules organiques ou de fines particules inorganiques ou un mélange de celles-ci.

10. Bande optique selon la revendication 1, dans laquelle une couche extrêmement mince comprenant le polyester (A) est disposée sur la surface exposée de la couche comprenant le polyester (A) de façon à stratifier la couche comprenant le polyester (B) et ladite couche mince à l'aide de la couche comprenant le polyester (A), et elle contient de 0,3 à 40 % en poids de particules inertes par rapport au polyester (A).

11. Bande optique selon la revendication 10, dans laquelle l'épaisseur de ladite- couche extrêmement mince n'est pas supérieure à 5 μm, et le rapport de l'épaisseur de la couche extrêmement mince comprenant le polyester (A) au diamètre particulaire moyen des particules inertes contenues dans la couche comprenant le polyester (A) est de 0,1 à 10.

**12.** Bande optique selon la revendication 10, dans laquelle le rapport $Rz^A/Ra^A$ de ladite couche extrêmement mince n'est pas supérieur à 15,0 ($Rz^A$ représentant une rugosité moyenne en 10 points et $Ra^A$ représentant une rugosité moyenne axiale), le nombre de pics (Pc) pour 0,8 mm n'étant pas inférieur à 50, et la valeur $Ra^A$ n'étant pas supérieure à 0,020 µm.

**13.** Bande optique selon la revendication 1, dans laquelle l'épaisseur du film de polyester à plusieurs couches étiré selon deux axes est de 3 à 50 µm, et dans laquelle l'épaisseur de la couche comprenant le polyester (B) est de 0,01 à 49,99 µm.

**14.** Bande optique selon la revendication 1, dans laquelle une couche de revêtement envers ayant la rugosité superficielle représentée par les formules générales (5) et (6) suivantes, est formée sur la surface exposée du film de polyester à plusieurs couches ayant les caractéristiques de surface représentées par les formules (1) a (3) suivantes, opposée à la couche d'enregistrement, et une caractéristique représentée par la formule (4) suivante :

$$Ra^B \leq 0,005 \qquad (1)$$

$$0,005 \leq Ra^A \leq 0,030 \qquad (2)$$

$$0,005 \leq Ra^A - Ra^B \leq 0,026 \qquad (3)$$

$$9 \leq F_5 \leq 30 \qquad (4)$$

$$0,012 \leq Ra^C \leq 0,040 \qquad (5)$$

$$0,003 \leq Ra^C - Ra^A \leq 0,035 \qquad (6)$$

$Ra^B$ représentant une rugosité axiale moyenne (µm) de la surface la moins rugueuse du film de polyester, $Ra^A$ représentant une rugosité axiale moyenne (µm) de la surface rendue fortement rugueuse du film de polyester, $Ra^C$ représentant une rugosité axiale moyenne (µm) de la surface de la couche de revêtement envers, et la valeur $F_5$ représentant la résistance à la traction à un allongement de 5 % dans le sens machine du film de polyester à plusieurs couches (kg/mm$^2$).

**15.** Bande optique selon la revendication 14, dans laquelle l'épaisseur de la couche de revêtement envers est de 0,01 à 5 µm.